# EUROPÄISCHE PATENTSCHRIFT

(11) **EP 1 716 950 B1**
(45) Veröffentlichungstag und Bekanntmachung des Hinweises auf die Patenterteilung: **21.09.2011**
(21) Anmeldenummer: 06405168.3
(22) Anmeldetag: 19.04.2006
(51) Int. Cl.: B23B 29/034

(54) **Ausdrehwerkzeug**
Boring tool
Outil à aléser

(30) Priorität: 26.04.2005 CH 7342005
(43) Veröffentlichungstag der Anmeldung: 02.11.2006
(73) Patentinhaber: Heinz Kaiser AG, 8153 Rümlang (CH)
(72) Erfinder: Stadelmann, Rudolf, 9244 Niederuzwil (CH); Hänggi, Ernst, 8172 Niederglatt (CH); Stadelmann, Ralph, 8166 Niederweningen (CH)
(74) Vertreter: Groner, Manfred

(56) Entgegenhaltungen:
- EP-A1- 0 804 984
- DE-A1- 3 940 089
- JP-A- 1 171 707
- US-A- 2 661 218
- US-A- 3 516 134

## Beschreibung

Die Erfindung betrifft ein Ausdrehwerkzeug mit einem Werkzeugkörper nach dem Oberbegriffdes Anspruchs 1. Ein solches Anschrehwerkzeug ist der US 266 1218 zu entnehmen.

Ausdrehwerkzeuge der genannten Art sind seit langem bekannt. Sie dienen beispielsweise und insbesondere zur Fertigbearbeitung von Präzisionsbohrungen. Am Werkzeugkörper ist das Werkzeug in der Regel ein Wendeplattenhalter, der zur Grobeinstellung lösbar am Werkzeugträger gelagert ist. Das Getriebe dient zur Feineinstellung des Aussendurchmessers im Bereich von wenigen µm bzw. Mikrometern.

Durch die DE-A-39 40 089 ist ein Ausdrehwerkzeug der genannten Art bekannt geworden. Die Differenzialspindel ist bei diesem direkt mit einer Skalascheibe verbunden.

Durch die DE-A-43 32 520 ist ein Ausdrehwerkzeug bekannt geworden, das in Achsialrichtung eine Zylinderbohrung aufweist, in der eine Stellschraube mit Feingewinde gelagert ist. Diese Stellschraube ist mit einem Einstellrad verbunden. Einstellrad und Stellschraube sind koaxial angeordnet. Durch Betätigen der Stellschraube am Einstellrad ist ein Schubteil in Achsialrichtung verstellbar. An diesem Schubteil sind Einkerbungen angeordnet, die einen vergleichsweise kleinen Winkel zur Längsachse besitzen. Durch die Einkerbungen wird eine Längsverstellung in eine senkrechte Verstellung und damit in einen Schub eines Schneidenhalters umgewandelt. Mit dem Schubteil bzw. den genannten Einkerbungen soll es möglich sein, eine noch genauere Feineinstellung zu erreichen. Das hier vorgesehene Getriebe zur Umwandlung der Drehbewegung des Einstellorgans in eine Schiebung des Schneidenhalters bedingt jedoch eine vergleichsweise grosse achsiale Baulänge. Der Aufbau dieses Ausdrehwerkzeuges ist zudem vergleichsweise aufwändig. Der Erfindung liegt die Aufgabe zugrunde, ein Ausdrehwerkzeug der genannten Art zu schaffen, das einfacher und zudem raumsparender realisierbar ist.

Die Aufgabe ist bei einem gattungsgemässen Ausdrehwerkzeug gemäss Anspruch 1 gelöst.

Beim erfindungsgemässen Ausdrehwerkzeug kann das Getriebe mit wenigen Einzelteilen und in kompakter Bauweise und sehr kostengünstig realisiert werden. Die Differenzialspindel ermöglicht durch entsprechende Differenz der Gewindesteigungen eine sehr grosse Übersetzung bei gleichzeitig kleinem Spiel. Beim erfindungsgemässen Ausdrehwerkzeug ist am Einstellorgan dadurch eine Skala möglich, bei welcher der Abstand zwischen zwei Skalenstrichen eine Schubbewegung von einem µm entspricht.

Nach einer Weiterbildung der Erfindung ist vorgesehen, dass die Differenzialspindel in einer Bohrung des Werkzeugträgers gelagert ist. Hierbei ist eine besonders kurze Bauweise dann möglich, wenn die Bohrung und damit die Differenzialspindel quer zur Drehachse des Werkzeugträgers verläuft. Die vergleichsweise kurze Bauweise ergibt eine hohe Stabilität.

Nach einer Weiterbildung der Erfindung ist vorgesehen, dass das Einstellorgan eine Skalascheibe aufweist, die seitlich am Werkzeugkörper angeordnet ist. Dies ermöglicht eine einfache und genaue Einstellung, beispielsweise mit einem Sechskantschlüssel.

Nach der Erfindung ist vorgesehen, dass das Einstellorgan eine Antriebsspindel aufweist, die längsverschiebbar mit der Differenzialspindel verbunden ist.

Die Antriebsspindel ist hierbei vorzugsweise mittels einer Lagerscheibe an einer Gewindemutter gelagert, die mit der Differenzialspindel wirkverbunden ist. Die Mutter ist hierbei vorzugsweise fest mit dem Werkzeugkörper verbunden. Beim Drehen der Antriebsspindel wird die Differenzialspindel gedreht und entsprechend der Differenz der Gewindesteigungen wird der Werkzeugträger radial verschoben.

Weitere vorteilhafte Merkmale ergeben sich aus den abhängigen Patentansprüchen, der nachfolgenden Beschreibung sowie der Zeichnung.

Ein Ausführungsbeispiel des erfindungsgemässen Ausdrehwerkzeuges wird nachfolgend anhand der Zeichnung näher beschrieben. Es zeigen:
- Figur 1: ein Schnitt durch ein erfindungsgemässes Ausdrehwerkzeug entlang der Linie I-I der Figur 2,
- Figur 2: eine Ansicht des Ausdrehwerkzeuges gemäss Figur 1 in Achsialrichtung,
- Figur 3: ein Schnitt durch das Ausdrehwerkzeug gemäss der Linie III-III der Figur 2,
- Figur 4: eine Seitenansicht des Ausdrehwerkzeuges und
- Figur 5: eine weitere Seitenansicht des erfindungsgemässen Ausdrehwerkzeuges.

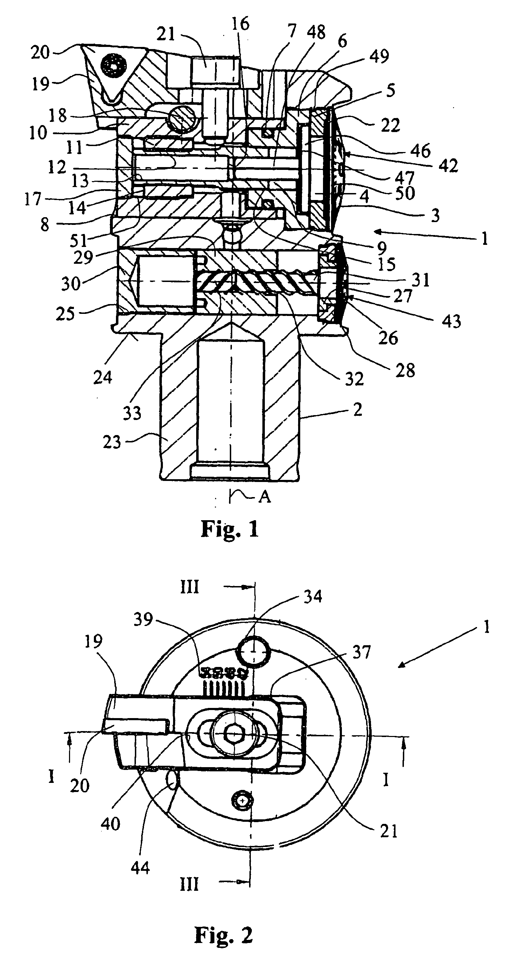

Die Figur 1 zeigt einen Ausdrehkopf 1, der einen Werkzeugkörper 2 aufweist, der eine radiale Bohrung 8 besitzt, in welcher ein Werkzeugträger 10 begrenzt radial verschiebbar gelagert ist. Die Bohrung 8 ist wie ersichtlich eine durchgehende Stufenbohrung. Der Werkzeugkörper 2 besitzt im Abstand zur Bohrung 8 eine weitere Bohrung 25, die parallel zur Bohrung 8 verläuft und in welcher für einen Unwuchtausgleich ein Ausgleichsgewicht 29 mittels einer Spindel 31 verschiebbar ist. Beide Bohrungen 8 und 25 verlaufen rechtwinklig zur Rotationsachse A des Ausdrehkopfes 1. Zudem weist der Werkzeugkörper 2 einen Schaft 23 auf, mit dem der Ausdrehkopf 1 mit einem hier nicht gezeigten Schaft oder dergleichen verbindbar ist, wobei eine Fläche 24 mittels wenigstens einer hier nicht gezeigten Klemmschraube an diesen Schaft oder dergleichen angepresst wird.

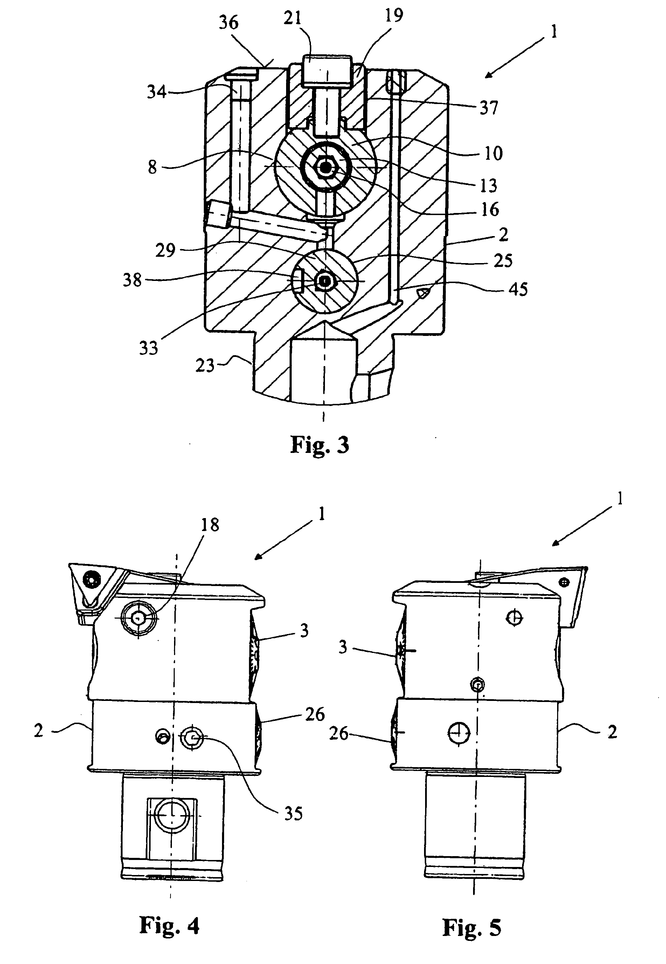

Der Werkzeugträger 10 ist gemäss Figur 3 unterhalb einer Nut 37 angeordnet, welche in eine Stirnfläche 36 des Werkzeugkörpers 2 eingearbeitet ist und in welcher ein Wendeplattenhalter 19 radial begrenzt verschiebbar gelagert ist. Mittels einer Klemmschraube 21 ist der Wendeplattenhalter 19 auf dem Werkzeugträger 10 festklemmbar.

Wie die Figur 2 zeigt, durchgreift die Klemmschraube 21 ein Langloch 40 des Wendeplattenhalters 19. Dieser kann somit im Bereich des Langloches 40 bei gelöster Klemmschraube 21 radial verstellt werden. Durch eine solche radiale Verstellung ist eine Grobeinstellung des Aussendurchmessers möglich. Hierzu ist auf der Stirnfläche 36 des Werkzeugkörpers 2 eine Skala 39 angebracht.

Am Wendeplattenhalter 19 ist eine an sich bekannte Wendeplatte 20 angeordnet. Der Abstand der Schneide dieser Wendeplatte 20 zur Rotationsachse A ergibt den Ausdrehradius. In der Stirnfläche 36 sind gemäss Figur 2 in an sich bekannter Weise ein Schmiernippel 34 sowie ein Kühlwasserausgang 44 angeordnet. Der Eingang des Kühlwassers erfolgt am Schaft 23 und wird über den in Figur 3 gezeigten Kanal 45 dem Kühlwasserausgang 44 zugeführt.

Für die Feineinstellung des Ausdrehdurchmessers ist ein Antrieb 41 vorgesehen, der eine Drehbewegung eines Einstellorgans 42 in eine radiale Schiebung des Werkzeugträgers 10 und damit in eine radiale Schiebung des Wendeplattenhalters 19 umwandelt. Das Einstellorgan 42 weist eine Antriebsspindel 4 auf, welche in Figur 1 in Ansicht gezeigt ist und die mit einer Lagerscheibe 5 an einer Gewindemutter 6 drehbar gelagert ist. Zur Lagerung der Antriebsspindel 4 weist diese einen Kragen 46 auf, der mit einer Tellerfeder 47 an die Lagerscheibe 5 angepresst wird. Die Antriebsspindel 4 besitzt zudem eine Mehrkantprofilstange 48, welche in ein korrespondierendes Mehrkantloch 16 einer Differenzialspindel 13 eingreift. Die Gewindemutter 6 sowie die Lagerscheibe 5 sind fest mit dem Werkzeugkörper 2 verbunden. Mit einem Dichtungsring 7 ist die Gewindemutter 6 gegenüber dem Werkzeugträger 10 abgedichtet. Die Antriebsspindel 4 kann um die Achse der Mehrkantprofilstange 48 gedreht werden, der Abstand zur Rotationsachse A bleibt aber immer erhalten. Zur Befestigung der Lagerscheibe 5 am Werkzeugkörper 2 besitzt diese ein Aussengewinde 49, das in ein entsprechendes Innengewinde der Bohrung 8 eingeschraubt ist.

Auf die Antriebsspindel 4 ist eine Skalascheibe 3 aufgeschraubt, die eine Strichskala 50 besitzt und die ein hier nicht gezeigtes Sechskantloch als Ansatzstelle für ein Werkzeug und insbesondere einen Sechskantschlüssel aufweist. Zwischen der Skalascheibe 3 und der Lagerscheibe 5 ist eine Tellerfeder 22 angeordnet. Beim Drehen der Skalascheibe 3 im Uhrzeigersinn oder Gegenuhrzeigersinn dreht damit spielfrei die Antriebsspindel 4 mit.

Der Werkzeugträger 10 besitzt eine Längsbohrung 51, in die eine Gewindehülse 11 eingeschraubt und beispielsweise durch Einleimen fest mit dem Werkzeugträger 10 verbunden ist. Diese Gewindehülse 11 besitzt ein Innengewinde 12, in das eine Differenzialspindel 13 mit einem Aussengewinde 14 eingeschraubt ist. Die Längsbohrung 51 ist mit einem eingeschraubten Verschlusszapfen 17 verschlossen. Die Differenzialspindel 13 besitzt ein weiteres Aussengewinde 15, auf welches die Gewindemutter 16 mit einem Innengewinde 9 aufgeschraubt ist. Die beiden Gewinde 14 und 15 besitzen gleichen Windungssinn sowie unterschiedliche Gewindesteigungen. Die Differenzialspindel 13 kann durch Drehen der Skalascheibe 3 im gleichen Sinn gedreht werden, wobei sich die Differenzialspindel 13 entsprechend der Gewindesteigung 15 in der Längsrichtung in der Bohrung 51 verschiebt. Da nun die Gewindehülse 11 fest mit dem Werkzeugträger 10 verbunden ist, verursacht die Drehbewegung der Differenzialspindel 13 am Gewinde 14 eine Verschiebung des Werkzeugträgers 10 in der Bohrung 8. Dabei verschiebt sich der Werkzeugträger 10 entgegen der Verschieberichtung der Differenzialspindel 13 um die Differenz der Gewindesteigungen 14 und 15. Die Gewindesteigung des Aussengewindes 14 beträgt beispielsweise 0,25 mm und die Gewindesteigung des Gewindes 15 0,275 mm. Die Differenz der Gewindesteigungen beträgt somit 0,025 mm. Eine Drehung der Skalascheibe 3 um einen Strichabstand beträgt dann beispielsweise eine Schiebung des Schneidenhalters 19 um 1 µm im Durchmesser. Das Getriebe, welches durch die Differenzialspindel 13 und der entsprechenden Gewinde 14 und 15 bzw. die Gewindemutter 6 und die Gewindehülse 11 gebildet wird, zeichnet sich durch einen einfachen Aufbau aus wenigen Teilen und durch eine weitgehende Spielfreiheit aus.

Nach dem Einstellen des Aussendurchmessers muss in der Regel der Ausdrehkopf 1 ausgewuchtet werden. Hierzu ist ein weiteres Einstellorgan 43 vorgesehen, das eine Skalascheibe 26 aufweist, die ebenfalls beispielsweise mit einem Sechskantschlüssel gedreht werden kann. Die Skalascheibe 26 bildet eine Spindel 31 mit einem vergleichsweise steilen Aussengewinde 32, welches in ein Innengewinde 33 des Ausgleichsgewichts 29 eingeschraubt ist. Zur Lagerung der Spindel 31 ist in die Bohrung 25 eine Lagerscheibe 28 eingeschraubt, welche eine Gewindemutter 27 aufnimmt. Beim Drehen der Spindel 31 wird das Ausgleichsgewicht 29 in Figur 1 nach rechts bzw. nach links verschoben. Die Bohrung 25 ist in der Figur 1 links mit einem Verschlusszapfen 30 verschlossen. Mit einer in Figur 4 gezeigten Klemmschraube 35 kann das Ausgleichsgewicht 29 fixiert werden.

Nachfolgend wird das Einstellen eines Ausdrehdurchmessers näher erläutert.

Zur Einstellung des gewünschten Ausdrehdurchmessers wird zunächst der Wendeplattenhalter 19 durch Lösen der Klemmschraube 21 gelöst. Mit Hilfe der Skala 39 wird nun der Wendeplattenhalter 19 von Hand radial grob eingestellt. Anschliessend wird die Klemmschraube 21 mit einem Sechskantschlüssel angezogen und damit wird der Wendeplattenhalter 19 am Werkzeugträger 10 festgelegt. Nun wird mit dem Sechskantschlüssel oder einem geeigneten Werkzeug oder einem hier nicht gezeigten Handrad an der Skalascheibe 3 angesetzt und die Skalascheibe zur Feineinstellung des Ausdrehdurchmessers gedreht. Hierbei wird der Werkzeugträger 10 zusammen mit dem Wendeplattenhalter 19 radial verschoben. Die Strichskala 50 gibt hierbei den Wert an, um welchen der Wendeplattenhalter 19 verschoben wird. Der Abstand zwischen zwei Skalenstrichen beträgt hier beispielsweise 1 µm im Durchmesser. Ist der gewünschte Ausdrehdurchmesser eingestellt, so wird der Werkzeugträger 10 durch Anziehen der Klemmschraube 18 am Werkzeugkörper 2 fixiert.

Um den Ausdrehkopf 1 auszuwuchten, wird das Ausgleichsgewicht 29 durch Drehen der Skalascheibe 26 in Figur 1 nach rechts oder nach links bewegt. Damit das Ausgleichsgewicht 29 nicht gedreht und lediglich in Längsrichtung der Bohrung 25 verschoben wird, ist gemäss Figur 3 ein Keil 38 vorgesehen, welcher das Ausgleichsgewicht 29 führt. Der Verschlusszapfen 30 bildet ein Gegengewicht zum Einstellorgan 43. Die Einstellung des Ausdrehdurchmessers und der Unwuchtausgleich erfolgen somit unabhängig voneinander. Mit einer Klemmschraube 35 wird die eingestellte Position des Ausgleichsgewichts 29 fixiert. Das Einstellorgan 42 und das Einstellorgan 43 sind auf der gleichen Seite des Ausdrehkopfes 1 und unmittelbar übereinander angeordnet, was das Einstellen erleichtert.

### Bezugszeichenliste

- 1: Ausdrehkopf
- 2: Werkzeugkörper
- 3: Skalascheibe
- 4: Antriebsspindel
- 5: Lagerscheibe
- 6: Gewindemutter
- 7: Dichtungsring
- 8: Bohrung
- 9: Innengewinde
- 10: Werkzeugträger
- 11: Gewindehülse
- 12: Innengewinde
- 13: Differenzialspindel
- 14: Aussengewinde (Spindel)
- 15: Aussengewinde (Spindel)
- 16: Mehrkantloch
- 17: Verschlusszapfen
- 18: Klemmschraube
- 19: Wendeplattenhalter
- 20: Wendeplatte
- 21: Klemmschraube
- 22: Tellerfeder
- 23: Schaft
- 24: Fläche
- 25: Bohrung
- 26: Skalascheibe
- 27: Mutter
- 28: Lagerscheibe
- 29: Ausgleichsgewicht
- 30: Verschlusszapfen
- 31: Spindel
- 32: Gewinde
- 33: Gewindebohrung
- 34: Schmiernippel
- 35: Klemmschraube
- 36: Stirnfläche
- 37: Nut
- 38: Keil
- 39: Skala
- 40: Langloch
- 41: Antrieb
- 42: Einstellorgan
- 43: Einstellorgan
- 44: Kühlwasserausgang
- 45: Kühlwasserkanal
- 46: Kragen
- 47: Tellerfeder
- 48: Mehrkantprofilstange
- 49: Aussengewinde
- 50: Strichskala
- 51: Bohrung
- A: Rotationsachse

## Patentansprüche

1. Ausdrehwerkzeug mit einem Werkzeugkörper (2), an dem ein Werkzeugträger (10) verstellbar gelagert ist, mit einem drehbaren Einstellorgan (42), mit dem zum Einstellen eines Ausdrehdurchmessers über ein Getriebe der Werkzeugträger (10) radial verschiebbar ist, wobei das Getriebe eine Drehung des Einstellorgans (42) in eine Schiebung des Werkzeugträgers (10) umwandelt, wobei das Getriebe eine Differenzialspindel (13) aufweist, welche zur Feineinstellung des Ausdrehdurchmessers eine Drehbewegung des Einstellorgans (42) in eine Schiebung des Werkzeugträgers (10) umwandelt, **dadurch gekennzeichnet, dass** das Einstellorgan (42) eine Antriebsspindel (4) aufweist, welche mit der Differenzialspindel (13) drehfest verbunden ist, dass die Antriebsspindel (4) eine Mehrkantprofilstange (48) aufweist, welche in ein Mehrkantloch (16) der Differenzialspindel (13) eingreift, dass die Differenzialspindel (13) über eine fest mit dem Werkzeugkörper (2) verbundene Mutter (6) wirkverbunden ist und dass die Differenzialspindel (13) in eine Gewindehülse (11) eingeschraubt ist, die fest mit dem Werkzeugträger (10) verbunden ist.

2. Ausdrehwerkzeug nach Anspruch 1, **dadurch gekennzeichnet, dass** die Differenzialspindel (13) in einer Bohrung (51) des Werkzeugträgers (10) gelagert ist.

3. Ausdrehwerkzeug nach Anspruch 2, **dadurch gekennzeichnet, dass** die Bohrung (51) und die Differenzialspindel (13) sich quer zur Rotationsachse (A) des Ausdrehkopfes erstrecken.

4. Ausdrehwerkzeug nach einem der Ansprüche 1 bis 3, **dadurch gekennzeichnet, dass** das Einstellorgan (42) eine Skalascheibe (3) aufweist, die seitlich am Werkzeugkörper (2) angeordnet ist.

5. Ausdrehwerkzeug nach einem der Ansprüche 1 bis 4, **dadurch gekennzeichnet, dass** die Differenzialspindel (13) zwei Aussengewinde (14, 15) aufweist, wobei das eine Aussengewinde (14) mit dem Werkzeugträger (10) und das andere Aussengewinde (15) mit dem Werkzeugkörper (2) wirkverbunden ist.

6. Ausdrehwerkzeug nach einem der Ansprüche 1 bis 5, **dadurch gekennzeichnet, dass** im Werkzeugkörper (2) ein Ausgleichsgewicht (29) radial verschieblich gelagert ist, das mit einem weiteren Einstellorgan (43) radial verstellbar ist.

7. Ausdrehwerkzeug nach Anspruch 6, **dadurch gekennzeichnet, dass** das Ausgleichsgewicht (29) in einer Querbohrung (25) angeordnet ist, welche parallel zu einer Querbohrung (8) verläuft, in welcher der Werkzeugträger (10) gelagert ist.

## Claims

1. A boring tool having a tool body (2) on which a tool carrier (10) is mounted in an adjustable manner, having a rotatable setting member (42) with which the tool carrier (10) is radially displaceable via a drive mechanism for setting the boring diameter, the drive mechanism converting a rotation of the setting member (42) into a displacement of the tool carrier (10), wherein the drive mechanism has a differential spindle (13) which converts a rotary movement of the setting member (42) into a displacement of the tool carrier (10) for the fine setting of the boring diameter, wherein the setting member (42) has a drive spindle (4) which is connected to the differential spindle (13) in a rotationally fixed manner, wherein the drive spindle (4) has a polygonal profile rod (48) which engages in a polygonal hole (16) of the differential spindle (13), wherein the differential spindle (13) is operatively connected via a nut (6) firmly connected to the tool body (2), and wherein the differential spindle (13) is screwed into a threaded sleeve (11) which is firmly connected to the tool carrier (10).

2. The boring tool as claimed in claim 1, wherein the differential spindle (13) is mounted in a bore (51) of the tool carrier (10).

3. The boring tool as claimed in claim 2, wherein the bore (51) and the differential spindle (13) extend transversely to the rotation axis (A) of the boring head.

4. The boring tool as claimed in one of claims 1 to 3, wherein the setting member (42) has a graduated dial (3) which is arranged laterally on the tool body (2).

5. The boring tool as claimed in one of claims 1 to 4, wherein the differential spindle (13) has two external threads (14, 15), the one external thread (14) being operatively connected to the tool carrier (10) and the other external thread (15) being operatively connected to the tool body (2).

6. The boring tool as claimed in one of claims 1 to 5, wherein a balancing weight (29) is mounted in the tool body (2) in a radially displaceable manner and can be radially adjusted by a further setting member (43).

7. The boring tool as claimed in claim 6, wherein the balancing weight (29) is arranged in a transverse bore (25) which runs parallel to a transverse bore (8) in which the tool carrier (10) is mounted.

## Revendications

1. Outil d'alésage comprenant un corps d'outil (2), sur lequel est monté de manière réglable un porte-outil (10); un organe d'ajustement rotatif (42), avec lequel le porte-outil (10) peut être déplacé radialement pour l'ajustement d'un diamètre d'alésage par le biais d'une transmission, la transmission convertissant une rotation de l'organe d'ajustement (42) en un coulissement du porte-outil (10), la transmission présentant une broche différentielle (13) qui, pour l'ajustement fin du diamètre d'alésage, convertit un mouvement de rotation de l'organe d'ajustement (42) en un coulissement du porte-outil (10), **caractérisé en ce que** l'organe d'ajustement (42) présente une broche d'entraînement (4) qui est connectée de manière solidaire en rotation à la broche différentielle (13), **en ce que** la broche d'entraînement (4) présente une barre profilée polygonale (48) qui vient en prise dans un trou polygonal (16) de la broche différentielle (13), **en ce que** la broche différentielle (13) est en liaison fonctionnelle par le biais d'un écrou (6) connecté fixement au corps d'outil (2) et **en ce que** la broche différentielle (13) est vissée dans une douille filetée (11) qui est connectée fixement au porte-outil (10).

2. Outil d'alésage selon la revendication 1, **caractérisé en ce que** la broche différentielle (13) est montée dans un alésage (51) du porte-outil (10).

3. Outil d'alésage selon la revendication 2, **caractérisé en ce que** l'alésage (51) et la broche différentielle (13) s'étendent transversalement à l'axe de rotation (A) de la tête d'alésage.

4. Outil d'alésage selon l'une quelconque des revendications 1 à 3, **caractérisé en ce que** l'organe d'ajustement (42) présente un disque gradué (3) qui est disposé latéralement sur le corps d'outil (2).

5. Outil d'alésage selon l'une quelconque des revendications 1 à 4, **caractérisé en ce que** la broche différentielle (13) présente deux filetages extérieurs (14, 15), l'un des filetages extérieurs (14) étant en liaison fonctionnelle avec le porte-outil (10) et l'autre filetage extérieur (15) étant en liaison fonctionnelle avec le corps d'outil (2).

6. Outil d'alésage selon l'une quelconque des revendications 1 à 5, **caractérisé en ce qu'**un poids d'équilibrage (29) est monté de manière déplaçable radialement dans le corps d'outil (2), et peut être réglé radialement avec un autre organe d'ajustement (43).

7. Outil d'alésage selon la revendication 6, **caractérisé en ce que** le poids d'équilibrage (29) est disposé dans un alésage transversal (25) qui s'étend parallèlement à un alésage transversal (8) dans lequel est monté le porte-outil (10).
